# EUROPEAN PATENT SPECIFICATION

(11) **EP 4 783 099 B1**
(45) Date of publication and mention of the grant of the patent: **09.12.2026**
(21) Application number: 25203860.9
(22) Date of filing: 23.09.2025
(51) Int. Cl.: G06Q 30/0201, G06Q 30/0204

(54) **METHOD AND SYSTEM FOR GENERATIVE ARTIFICIAL INTELLIGENCE BASED ASSISTANT FOR A SPECIALTY RETAIL STORE**
VERFAHREN UND SYSTEM FÜR EINEN ASSISTENTEN AUF BASIS VON GENERATIVER KÜNSTLICHER INTELLIGENZ FÜR EIN SPEZIALEINZELHANDELSGESCHÄFT
PROCÉDÉ ET SYSTÈME D'ASSISTANT GÉNÉRATIF BASÉ SUR L'INTELLIGENCE ARTIFICIELLE POUR UN MAGASIN DE VENTE AU DÉTAIL SPÉCIALISÉ

(30) Priority: 23.01.2025 IN 202521005603
(43) Date of publication of application: 29.07.2026
(73) Proprietor: Tata Consultancy Services Limited, Mumbai, Maharashtra 400 021 (IN)
(72) Inventor: THIRUNAVUKKARASU, Jeisobers, Chennai, Tamil Nadu 600058 (IN); ULAGANATHAN, Selva Ganapathy, Chennai, Tamil Nadu 603103 (IN); THANGAVEL, Vaira Muthu, Chennai, Tamil Nadu 600017 (IN); KUMAR, Hareesh, Chennai, Tamil Nadu 600017 (IN); GOPAL, Dhanasekaran, Chennai, Tamil Nadu 600119 (IN); SAHU, Sutirtha, Bangalore, Karnataka 560066 (IN)
(74) Representative: Goddar, Heinz J.

(56) References cited:
- US-A1- 20240 281 410
- SHANGYU WU ET AL: "Retrieval-Augmented Generation for Natural Language Processing: A Survey", ARXIV.ORG, CORNELL UNIVERSITY LIBRARY, 201 OLIN LIBRARY CORNELL UNIVERSITY ITHACA, NY 14853, 18 July 2024 (2024-07-18), XP091826023

## Description

### CROSS-REFERENCE TO RELATED APPLICATIONS AND PRIORITY

The present application claims priority to Indian application no. 202521005603 filed on January 23, 2025.

### TECHNICAL FIELD

The disclosure herein generally relates to the field of generative artificial intelligence (GenAI), and more particularly, a method and system for a generative artificial intelligence (GenAI) based assistant to implement one or more competitive retail strategies associated with specialization of a specialty retail store.

### BACKGROUND

In competitive retailing, specialty competitive stores which are located in the trade area of a specialty retailer store need to be considered for competitive strategies. In practice lot of competitive specialty stores in the trade area are left out due to practical difficulties, their lesser popularity, lower size and smaller business volume and the like, and it leads to incomplete inputs for store specific competitive strategies. In addition, it is challenging to visit a brick-and-mortar competitor stores in person and collect the available item information to understand the nature of specialization of the store.

Specialty context varies based on the specialty retailer. In an instance, for the book retailer, the retailers may have hyper specialization such as medical books, engineering books. In another instance, the comparison would be based on level of advancement of content such as seller with basic books and seller with advanced books. In another instance, for apparel retailers, specialization would be based on the unique design pattern in the apparel carried by respective specialty retail store. Thus, hyper specialization exists for every specialty retailing and the specialty context needs to be used to compare two stores with same specialization. Existing technologies do not have a method to compare two stores based on specialty context.

As per existing technology, there are challenges for comparing two stores based on semantic similarity which is more closely approximate human-level semantic understanding. Availability of unstructured data and arriving human level semantic understanding while comparing two stores becomes essential as it is required to arrive reliable outcomes from the unstructured data and to implement competitive retail strategies associated with specialization more confidently. US 2024/281410 A1 (WILLIAMS JARED [US] ET AL) 22 August 2024 (2024-08-22) discloses an automated crawler for crawling a primary online content object and storing a set of results, a parser for parsing the stored set of results to generate a plurality of key phrases and a content corpus, a plurality of models for processing at least one of the plurality of key phrases or the content corpus, wherein the processing results in a plurality of topic clusters which arrange topics within the primary online content object around a core topic based on semantic similarity, a suggestion generator for generating a suggested topic that is similar to at least one topic among the plurality of topic clusters and for storing the suggested topic, and an application for developing a strategy for development of online presence content.

### SUMMARY

Embodiments of the present disclosure present technological improvements as solutions to one or more of the above-mentioned technical problems recognized by the inventors in conventional systems. For example, in one embodiment, a method for a generative artificial intelligence (GenAI) based assistant to implement one or more competitive retail strategies associated with specialization of a specialty retail store is provided. The processor-implemented method includes receiving, via an Input/Output (I/O) interface, location of a retail specialty store of a retailer, determining a plurality of unknown stores within a predefined trade area of the retail specialty store using a web mapping platform, and identifying an e-commerce website of each of the plurality of unknown stores and the retailer specialty store using a web crawling technique.

Further, the processor-implemented method includes obtaining one or more details of an e-commerce website of each of the plurality of unknown stores and the retailer specialty store, storing the obtained one or more details of the ecommerce website of each of plurality of unknown stores and the retailer specialty store into an individual specific containers separately in an unstructured format, and enhancing the content of each container by applying iteratively at least one contextual embedding technique.

Further, the processor-implemented method includes computing a cosine similarity for any two containers with the enriched content and repeating to all pairwise containers to derive a cosine similarity matrix, and identifying one or more latent variables, cumulative variance contribution and one or more factor loadings by applying a principal component analysis (PCA) on the computed cosine similarity matrix. Finally, the processor-implemented method includes maximizing the identified cumulative variance contribution to select an ideal enriched content from each container of the plurality of unknown stores and the retailer specialty store and store into an associated retrieval augmented generation (RAG) file and performing a plurality of tasks associated with specialty retailing using the selected ideal enriched content of one store among the unknown stores and the retailer specialty store.

In another embodiment, a system for a generative artificial intelligence (GenAI) based assistant to implement one or more competitive retail strategies associated with specialization of a specialty retail store is provided. The system comprises a memory storing a plurality of instructions, one or more Input/Output (I/O) interfaces, and one or more hardware processors coupled to the memory via the one or more I/O interfaces. The one or more hardware processors are configured by the instructions to receive, via an Input/Output (I/O) interface, location of a retail specialty store of a retailer.

The one or more hardware processors are configured by the instructions to determine a plurality of unknown stores within a predefined trade area of the retail specialty store using a web mapping platform and identify an e-commerce website of each of the plurality of unknown stores and the retailer specialty store using a web crawling technique.

The one or more hardware processors are configured by the instructions to obtain one or more details of an e-commerce website of each of the plurality of unknown stores and the retailer specialty store, store the obtained one or more details of the ecommerce website of each of plurality of unknown stores and the retailer specialty store into an individual specific containers separately in an unstructured format, and enhance the content of each container by applying iteratively at least one contextual embedding technique.

The one or more hardware processors are configured by the instructions to compute a cosine similarity for any two containers with the enriched content and repeating to all pairwise containers to derive a cosine similarity matrix, and identify one or more latent variables, cumulative variance contribution and one or more factor loadings by applying a principal component analysis (PCA) on the computed cosine similarity matrix. Finally, the one or more hardware processors are configured by the instructions to maximize the identified cumulative variance contribution to select an ideal enriched content from each container of the plurality of unknown stores and the retailer specialty store and store into an associated RAG file and perform a plurality of tasks associated with specialty retailing using the selected ideal enriched content of one store among the unknown stores and the retailer specialty store.

In yet another aspect, there are provided one or more non-transitory machine-readable information storage mediums comprising one or more instructions, which when executed by one or more hardware processors causes a method for a generative artificial intelligence (GenAI) based assistant to implement one or more competitive retail strategies associated with specialization of a specialty retail store is provided. The processor-implemented method includes receiving, via an Input/Output (I/O) interface, location of a retail specialty store of a retailer, determining a plurality of unknown stores within a predefined trade area of the retail specialty store using a web mapping platform, and identifying an e-commerce website of each of the plurality of unknown stores and the retailer specialty store using a web crawling technique.

Further, the processor-implemented method includes obtaining one or more details of an e-commerce website of each of the plurality of unknown stores and the retailer specialty store, storing the obtained one or more details of the ecommerce website of each of plurality of unknown stores and the retailer specialty store into an individual specific containers separately in an unstructured format, and enhancing the content of each container by applying iteratively at least one contextual embedding technique.

Further, the processor-implemented method includes computing a cosine similarity for any two containers with the enriched content and repeating to all pairwise containers to derive a cosine similarity matrix, and identifying one or more latent variables, cumulative variance contribution and one or more factor loadings by applying a principal component analysis (PCA) on the computed cosine similarity matrix. Finally, the processor-implemented method includes maximizing the identified cumulative variance contribution to select an ideal enriched content from each container of the plurality of unknown stores and the retailer specialty store and store into an associated RAG file and performing a plurality of tasks associated with specialty retailing using the selected ideal enriched content of one store among the unknown stores and the retailer specialty store.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 illustrates a block diagram of a system for a generative artificial intelligence (GenAI) based assistant for a specialty retail store, according to some embodiments of the present disclosure.
FIG. 2 is illustrating an overall architecture of the system of FIG. 1 for a generative artificial intelligence (GenAI) based assistant for a specialty retail store, according to some embodiments of the present disclosure.
FIGS. 3A and 3B are exemplary flow diagrams illustrating a processor-implemented method for a generative artificial intelligence (GenAI) based assistant for a specialty retail store, according to some embodiments of the present disclosure.
FIG. 4 is a flow diagram illustrating the processor-implemented method to generate one or more recommendations to an end user for executing one or more corrective actions, according to some embodiments of the present disclosure.

### DETAILED DESCRIPTION OF EMBODIMENTS

Exemplary embodiments are described with reference to the accompanying drawings. In the figures, the left-most digit(s) of a reference number identify the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

In general, semantic similarity is vital in Generative AI (GenAI) to ensure that responses are contextually relevant, not merely syntactically correct. It allows AI to grasp the nuanced intent behind user queries, providing meaningful and accurate responses instead of literal but irrelevant answers. During GenAI execution, response relevancy becomes subjective and quantification of tracking of response relevancy is the need of the industry.

Retailers need to identify the current position of the retailer with the competitors with respect to specialization and it is required in identifying gap in the existing assortment and making suitable strategies to overcome the gaps.

Embodiments herein provide a method and system for a generative artificial intelligence (GenAI) based assistant to implement one or more competitive retail strategies associated with specialization of a specialty retail store.

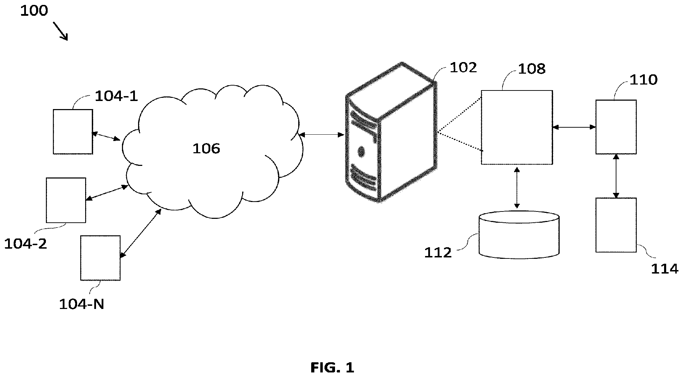

Referring now to the drawings, and more particularly to FIG. 1 through FIG. 4, where similar reference characters denote corresponding features consistently throughout the figures, there are shown preferred embodiments, and these embodiments are described in the context of the following exemplary system and/or method.

FIG. 1 illustrates a block diagram of a system 100 for a voice assisted defect logging and quality inspection, according to some embodiments of the present disclosure. Although the present disclosure is explained considering that the system 100 is implemented on a server, it may be understood that the system 100 may comprise one or more computing devices 102, such as a laptop computer, a desktop computer, a notebook, a workstation, a cloud-based computing environment and the like. It will be understood that the system 100 may be accessed through one or more input/output interfaces 104-1, 104-2... 104-N, collectively referred to as I/O interface 104. Examples of the I/O interface 104 may include, but are not limited to, a user interface, a portable computer, a personal digital assistant, a handheld device, a smartphone, a tablet computer, a workstation, and the like. The I/O interface 104 is communicatively coupled to the system 100 through a network 106.

In an embodiment, the network 106 may be a wireless or a wired network, or a combination thereof. In an example, the network 106 can be implemented as a computer network, as one of the different types of networks, such as virtual private network (VPN), intranet, local area network (LAN), wide area network (WAN), the internet, and such. The network 106 may either be a dedicated network or a shared network, which represents an association of the different types of networks that use a variety of protocols, for example, Hypertext Transfer Protocol (HTTP), Transmission Control Protocol/Internet Protocol (TCP/IP), and Wireless Application Protocol (WAP), to communicate with each other. Further, the network 106 may include a variety of network devices, including routers, bridges, servers, computing devices, storage devices. The network devices within the network 106 may interact with the system 100 through communication links.

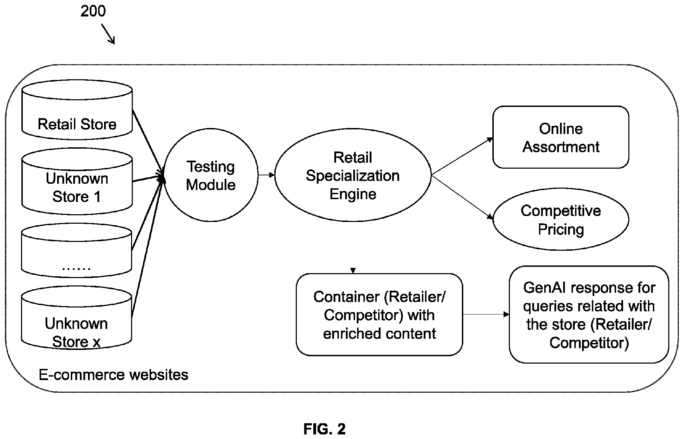

The system 100 supports various connectivity options such as BLUETOOTH^{®}, USB, ZigBee, and other cellular services. The network environment enables connection of various components of the system 100 using any communication link including Internet, WAN, MAN, and so on. In an exemplary embodiment, the system 100 is implemented to operate as a stand-alone device. In another embodiment, the system 100 may be implemented to work as a loosely coupled device to a smart computing environment. Further, the system 100 comprises at least one memory 110 with a plurality of instructions, one or more databases 112, and one or more hardware processors 108 which are communicatively coupled with the at least one memory to execute a plurality of modules 114 therein as depicted in FIG. 2. The plurality of modules 114 include an intention derivation engine and a retail specialization engine. The components and functionalities of the system 100 are described further in detail.

FIG. 2 is a functional block diagram 200 to illustrate the system 100 for a generative artificial intelligence (GenAI) based assistant to implement one or more competitive retail strategies associated with specialization of a specialty retail store, according to some embodiments of the present disclosure. In one embodiment, the system 100 is configured to compare two online stores based on their online contents such as nature of online assortment and vision as per their website and the like. As per existing technology, there are challenges for comparing two stores based on semantic similarity which is more closely approximate human-level semantic understanding. Availability of unstructured data and arriving human level semantic understanding while comparing two stores becomes essential as it is required to arrive reliable outcomes from the unstructured data and to implement competitive retail strategies associated with specialization more confidently.

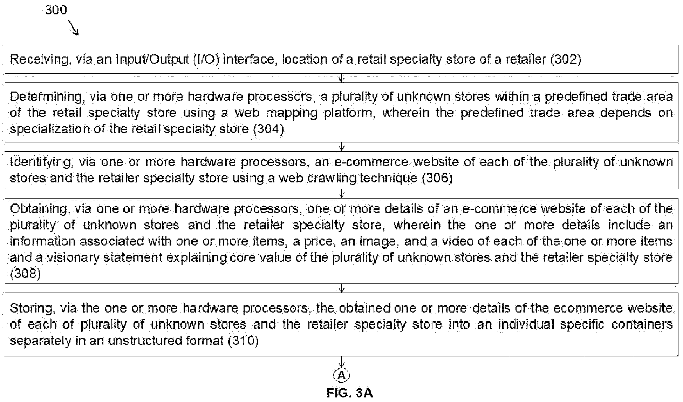

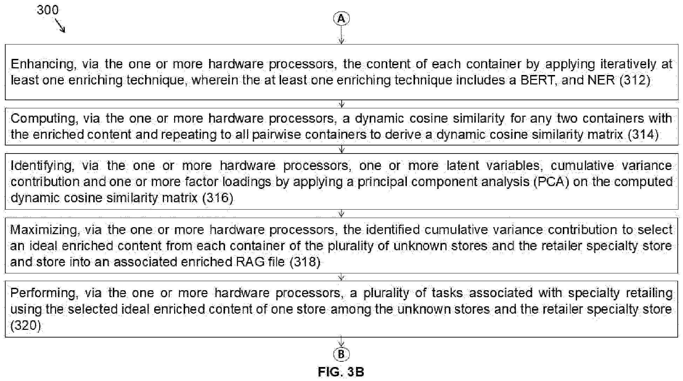

FIGS. 3A and 3B are flow diagrams illustrating a processor-implemented method 300 for a generative artificial intelligence (GenAI) based assistant to implement one or more competitive retail strategies associated with specialization of a specialty retail store implemented by the system 100 of FIG. 1, in accordance with an embodiment of the present disclosure. Functions of the components of the system 100 are now explained through steps of flow diagram in FIG. 3, according to some embodiments of the present disclosure. In the method and system for a generative artificial intelligence (GenAI) based assistant to implement one or more competitive retail strategies associated with specialization of a specialty retail store.

Initially, at step 302 of the processor-implemented method 300, the one or more hardware processors 108 are configured by the programmed instructions to receive a location of a retail specialty store of a retailer. The retail store of a specialty retailer is located using a web mapping platform such as google map, etc.,.

At the next step 304 of the processor-implemented method 300, the one or more hardware processors 108 are configured by the programmed instructions to determine a plurality of unknown stores within a predefined trade area of the retail specialty store using a web mapping platform, wherein the predefined trade area depends on a category of the retail specialty store. The retail store of a specialty retailer and surrounding unknown stores are located using a web mapping platform. Specialty retailers like toy shops, bookstores, sporting goods stores and beauty stores cover narrower customer bases. Within book Store, there are further subtypes may arise based on depth of assortment and the subtypes may be such as bookstores for college books, or schoolbooks or medical books or engineering books. Web mapping platforms such as google maps, and the like are used to locate unknown stores that reside within a trade area surrounding a specialty retail store for a location. Trade areas will vary depending on the specialty of the retail store. In an instance, if the retail specialty store is related to dairy, then the store may have 2 kilometer (KM) as trade area and if it is an electronic specialty store, the store may have 10 KM as trade area.

At the next step 306 of the processor-implemented method 300, the one or more hardware processors 108 are configured by the programmed instructions to identify an e-commerce website of each of the plurality of unknown stores and the retailer specialty store using a web mapping tool or web crawling technique.

At the next step 308 of the processor-implemented method 300, the one or more hardware processors 108 are configured by the programmed instructions to obtain one or more details of an e-commerce website of each of the plurality of unknown stores and the retailer specialty store in a testing module. For each identified unknown store, their e-commerce website is noted, and content of the e-commerce website is collected through crawling. Information available in different sub sections of the e-commerce website is collected with the intent to capture the detailed information about the type of online retailing carried out by the unknow store. The collected information is the available information in their e-commerce website such as aim/vision, name of the items and their description, price, images, videos of each items and stored in a container with an identification number. The same process is repeated for each unknown stores located within the trade area and stored in a container with respective identification number. The one or more details include an information associated with one or more items, a price, an image, and a video of each of the one or more items and a visionary statement explaining core value of the plurality of unknown stores and the retailer specialty store.

At the next step 310 of the processor-implemented method 300, the one or more hardware processors 108 are configured by the programmed instructions to store the obtained one or more details of the ecommerce website of each of plurality of unknown stores and the retailer specialty store into an individual specific containers separately in an unstructured format.

Each container has content with information about unique characteristics of a store in terms of the nature of business done by the store. For example, the information may be related to items carried in online assortment, and visionary statement of their business such as low price guarantee, keeping mostly premium items, selling only advanced books, and the like, by going through the content of a container, (a) an user may be able to understand unique characteristic of the store or (b) a machine with GenAI capabilities may be able to understand the nature of business done by the store. The user may get basic information about the store from the content of container of the store and if he needs more specific information about an item carried by the store, he may get the information from other sources such as referring the same item in search engines such as Google, Bing, etc., and may get the additional information from the search engine.

For the machine with GenAI capabilities to understand the content of the container, it needs to be processed in unique way and the success in extracting the information and providing response to queries using GenAI depends on nature of processing. In an instance, content of a container may be processed into vector embedding and stored as RAG files for a store. In another instance the content may be enriched through different techniques such as contextual embedding and the like and stored as enriched RAG files. It is assumed that the enriched content has richer information as compared to raw content in providing response by machine for user query. For example, if one container belongs to a bookstore and has information about medical academic books, it may provide response to query such as *'what are the pathological books available in the store'.* However, it may not provide specific response to query such as *'what are the available pathological books related with latest neurological disorders post covid and the books may be required for pursuing post-graduation or doctorate in pathology'.* In contrast, the container with enriched content may provide the required specific response and the process of content enrichment is explained in the next section.

At the next step 312 of the processor-implemented method 300, the one or more hardware processors 108 are configured by the programmed instructions to enrich the content of each container by applying iteratively at least one enriching method in a testing module. The at least one enriching method includes a Bidirectional encoder representations from transformers (BERT) and a Named Entity Recognition (NER) and the like. Capturing unique characteristics of a specialty competitor stores is enabled by applying dynamic enrichment of content of corresponding container through at least one technique such as contextual embedding and the like in the testing module and direction for enrichment is provided by approximating existing patterns that occur among the specialty competitive stores which is explained in later sections.

The NER is a subtask of information extraction that seeks to locate and classify named entities mentioned in unstructured text into predefined categories such as the names of persons, organizations, locations, expressions of times, quantities, monetary values, percentages, etc. The NER systems typically use machine learning algorithms, which are trained on annotated datasets where the named entities are labeled manually. Some popular algorithms for NER include Hidden Markov Models (HMMs), Conditional Random Fields (CRFs), and neural network-based models like Long Short-Term Memory networks (LSTMs).

In another example, consider the word *"bank".* In the sentence *"I need to go to the bank to deposit some money",* the word *"bank"* refers to a financial institution. However, in the sentence *"The riverbank is flooded due to heavy rain",* the word *"bank"* refers to the land alongside a river. Traditional word embeddings would represent the word *"bank"* with the same vector regardless of the sentence, which can lead to confusion if we're trying to understand the text or infer the user's intent based on their search or purchase history. Contextual embeddings, however, would provide different vectors for each instance of *"bank".* In the context of the first sentence, the embedding for *"bank"* would be closer to vectors for words like *"money", "deposit", "withdrawal"* etc. In the context of the second sentence, the embedding for *"bank"* would be closer to vectors for words like *"river", "flood", "soil"* etc.

By using these context-specific embeddings, a machine learning model can more accurately understand and categorize products based on their descriptions. For instance, if a customer is buying *"cream"* and the product description is *"This cream is perfect for baking a cake",* a contextual embedding model would understand that the product is likely to be a *"cooking cream"* rather than *a "skin care cream ".* This level of understanding is crucial for inferring the intention behind a customer's purchase when the product names alone might be ambiguous. Contextual embeddings can greatly enhance the model's ability to discern the intention behind the purchase of seemingly disparate items that might actually serve a similar purpose for the customer. This leads to more accurate recommendations, targeted marketing, and improved customer satisfaction.

At the next step 314 of the processor-implemented method 300, the one or more hardware processors 108 are configured by the programmed instructions in a retail specialization engine to compute a cosine similarity for any two containers with the dynamic enriched content and repeating to all pairwise containers to derive a dynamic cosine similarity matrix.

Dynamic content of a container is compared with dynamic content of another container for contextual similarity with respect to content of each container by applying multimodal GenAI foundation models using measures such as cosine similarity by considering nature of contents stored in the two containers. The resulting cosine similarity ranges from -1 meaning exact dissimilarity, to *I* meaning exactly the same, with 0 indicating orthogonality or decorrelation, while in-between values indicate intermediate similarity or dissimilarity. A user or a business expert may compare websites of two stores located within a trade area to understand unique characteristics of each store in terms of online assortment followed by each store, and core value of their business and he may compare the two stores based on contextual criteria. Similar way, system tries to find similarities between two containers using measures for contextual similarity such as cosine similarity. Cosine similarity is found between two containers and the process is repeated for all pairs of containers and arranged in a matrix termed as dynamic cosine similarity matrix as the pairwise cosine similarity value will very depend on the nature of enrichment.

At the next step 316 of the processor-implemented method 300, the one or more hardware processors 108 are configured by the programmed instructions in the retail specialization engine to identify one or more latent variables, cumulative variance contribution and one or more factor loadings by applying a principal component analysis (PCA) on the computed dynamic cosine similarity matrix. The dynamic cosine similarity matrix is passed into a variable reduction technique such as principal component analysis. The principal component analysis provides details about significant latent variables, cumulative variance contribution, eigen values and factor loadings.

The outcome of principal component analysis namely counts and structure of latent variables and loading of each retail store may give many useful information regarding type or subtypes of specialization and magnitude of specialization as compared with other stores within the trade area. The number of distinct types of specialization are represented by the number of latent variables. Latent variables are orthogonal to each other. In one instance, the first two latent variable are orthogonal to each other. For example, bookstores may come in the first latent variable and sports good stores may come in second latent variable and they are entirely different from nature of items sold by them.

Retail stores having specialization may form a latent variable. In an instance, retail stores having only books in their online assortment may form a latent variable. More specifically retail stores selling more specific books in their online assortment may form a latent variable. Retail stores selling only schoolbooks may form a latent variable. The other specialization may be bookstores with only college books, bookstores with only medical books, bookstores with only engineering books and the like.

The one or more latent variables represent the type of specialization of the plurality of stores including unknown stores and retailer stores in which the plurality of stores having specific type of items form a latent variable. The one or more latent variables with the specialty retailer store are identified and the plurality of unknown stores in the identified latent variable are the competitive stores and level of competition is identified from magnitude of factor loading of each unknown stores within the identified latent variable.

The identified one or more latent variables, and one or more the factor loadings are analyzed to derive intention of the plurality of unknown stores within the predefined trade area of the location of the retail specialty store. At least one competitive store and level of competition is identified by determining position of the plurality of unknown stores within latent variable based on the specialization type, magnitude of the one or more factor loadings. A difference between the identified at least one competitive store and the specialty retail store is observed by applying the multimodal GenAI models on corresponding containers with enriched contents.

Competitive stores with respect to a retail store are identified in two stages. In the first stage, latent variable with the retailer store is identified and all the stores in the identified latent variable are termed as competing stores. Secondly, the level of competition is quantified from loading of each store within the latent variables. The magnitude of loading is used to locate the position of the retail store as compared with other stores having the same specialty within the trade area and next action items based on the current position of retail store. In an instance, the retailer specialization engine generates a first latent variable having factor loadings of 0.90, 0.80, 0.70...etc. for a local unknown store 1, a retailer store, a local unknown store 2 respectively, which indicates specialization of retailer store is 89 % (0.80/0.90) in comparison to the local unknown store 1 and next action needs to be focused by comparing the container content of the unknown store 1 and container content of retailer store as described in next section. In the same way, specialization of the local store 3 is at 78% (0.70/0.90) in comparison to the local store 1.

At the next step 318 of the processor-implemented method 300, the one or more hardware processors 108 are configured by the programmed instructions in the retail specialization engine to maximize the identified cumulative variance contribution to select an ideal enriched content from each container of the plurality of unknown stores and the retailer specialty store and store into an associated RAG file. Capturing unique characteristics of a specialty competitor stores is enabled by applying dynamic enrichment of content of corresponding container through at least one enriching technique such as contextual embedding and the like in the testing module and direction for enrichment is provided by approximating existing patterns that occur among the specialty competitive stores through maximization of the identified cumulative variance contribution. The RAG file corresponding to enriched content of a store container may be used to get response for queries related with the store by using GenAI with improved relevancy as explained in later section.

The maximizing of cumulative variance contribution enables enriching the content of container in two stages such as (i) in initial phase, enrichment happens within the scope defined as prompts in prompt engineering and to move towards natural grouping that exist among the specialty stores and (ii) in later phase, enrichment happens automatically towards hyper specialization that exist naturally among the stores. Depth of differentiation among the stores with respect to specialization is maximized and the content is enriched by the direction of existing groups among the stores in the form of specialization.

Finding ideal contextual similarity using ideal enriched content through deriving natural patterns that exist between two stores is found in two phases by applying PCA. Initial phase is driven by user to give initial direction to the system and later phase is driven by system automatically to arrive best possible pattern as per the initial direction and thus to achieve more closely approximate human-level semantic understanding.

In the Initial phase, it is driven by the user. User needs to provide instruction in prompt engineering through guardrails. Websites may have information. The contextual similarity between contents of two stores can be derived in many ways such as based on appearance of websites, nature of content, and the like. In terms of appearance of web sites, appearance of images, videos associated with items and the like. User needs to inform the system through suitable instruction in prompt engineering. With respect to specialty retailing, users need to inform the system to focus on business context more particularly on nature of items and core value of business of each store during prompt engineering. Thus, content of two stores is compared from business context by system in such a way that how a human will compare website contents of two stores based on specialty retailing and the instruction ensures that the other criteria such as appearance and the like are not used for comparison of stores.

For understanding purpose, the following scenario using appearance as the criteria for pattern formation is explained as follows. It is to be noted that cosine similarity can be found by the system 100 using appearance as the only criteria while comparing website content of two stores. As the appearance of website of a store has many attributes such as screen color, orientation of different menu and the like, all attributes are given equal weights while deriving cosine similarity. When it is done by a human being, the two stores may be compared with unequal weights to attributes. In the same way, when two stores are compared by using business context such as nature of items and value of the business, the attributes related with business context are given unequal weights indirectly by system through series of iteration and it is ensured by pattern formation in the form or specialization and the patterns are formed during PCA.

A few examples for the attributes are description of the items, image and video of the item, core value of the store and the like. It is assumed that the best possible pattern that exists among the stores is the hidden existing pattern in the form of specialization. In one instance, two specialty stores such as bookstores will have more similar content with respect to specialization as compared to contents of two random stores and enrichment of content of the two bookstores enable to move towards more similar enriched content and the nature of cosine similarity measure used for comparison with the enriched contents will be the improved measure. Thus, those stores having similar enriched contents will form a pattern which is unique, and direction for enrichment for contextual embedding model, Bidirectional Encoder Representations from Transformers (BERT) is given by better pattern formation in the form of maximizing cumulative variance contribution.

The later phase is driven by a system automatically to arrive at the best possible natural pattern to achieve approximation of human understanding in terms of contextual similarity. In the later phase, it is driven by system by repeated iterations and system will try to find best possible pattern which is natural and the contextual similarity at the maximum point of pattern is assumed to mirror human understanding at the best.

Here the contextual similarity is derived through experimentations by iterative process in the testing module by applying many techniques and data processing activities. In an instance, the technique may be at least one contextual embedding technique such as BERT, NER and the like. More details about BERT and NER were described in the earlier sections. In another instance the other data processing techniques include filtering of content of container to subset the content and using for pattern formation.

Finally, at the last step 320 of the processor-implemented method 300, the one or more hardware processors 108 are configured by the programmed instructions in the retail specialization engine to perform a plurality of tasks associated with specialty retailing using the selected ideal enriched content of one store among the unknown stores and the retailer specialty store. The plurality of tasks are many including (a) getting response with improved relevance to GenAI queries related with one store among the unknown stores and the retailer specialty store by applying GenAI in which the improved relevancy is measured in comparison to the response received from text without enrichment (b) to locate gap in online assortment for the retailer latent variable formation store using the enriched RAG files with enriched content and to identify the position of the retail specialty store with respect to specialization in the trade area.

The enriched content in the container is rich in the hyper specialty context and could be used for GenAI related tasks. In an instance the enriched content may be used for generating response by applying GenAI. It is assumed that the response will be more relevant as compared to using raw content captured on the websites. It is assumed that the enriched content has richer information as compared to raw content in providing response by GenAI for a user query. For example, if one container with raw content without enrichment belongs to a bookstore and has information about medical academic books, it may provide response to a query such as *'what are the pathological books available in the store'.* However, it may not provide specific response to a query such as *'what are the available pathological books related with latest neurological disorders post covid'* and it is assumed that those books are required for pursuing post-graduation or doctorate in pathology. In contrast, the container with enriched content may provide the required specific response.

It is well known that if there are two text files, then the difference in the content between two text files can be identified by applying GenAI models. The enriched content of two containers is passed into GenAI models such as ChatGPT to identify the unique items that are different in the specialty competitor. Thus, the unique items carried in online assortment by competitor are identified based on specialty context.

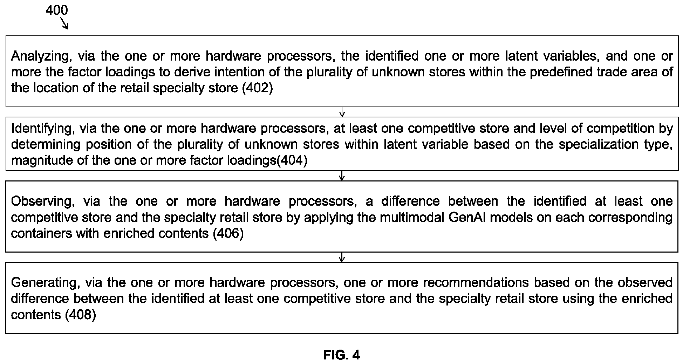

Referring FIG. 4, a flow diagram 400, illustrating the processor-implemented method 300 to generate one or more recommendations to an end user for executing one or more corrective actions, according to some embodiments of the present disclosure.

At the first step 402, the one or more hardware processors 108 are configured by the programmed instructions to analyze the identified one or more latent variables, and one or more the factor loadings to derive intention of the plurality of unknown stores within the predefined trade area of the location of the retail specialty store.

At the next step 404, the one or more hardware processors 108 are configured by the programmed instructions to identify at least one competitive store and level of competition by determining position of the plurality of unknown stores within latent variable based on the specialization type, magnitude of the one or more factor loadings, wherein the magnitude of factor loading and distinct specialization type are considered to place the plurality of unknown stores in the top position of the competitive stores list.

At the next step 406, the one or more hardware processors 108 are configured by the programmed instructions to observe a difference between the identified at least one competitive store and the specialty retail store by applying the multimodal GenAI models on corresponding containers with enriched contents.

At the last step 408, the one or more hardware processors 108 are configured by the programmed instructions to generate one or more recommendations based on the observed difference between the identified at least one competitive store and the specialty retail store using the enriched contents, wherein the generated one or more recommendations are displayed to an end user for executing one or more corrective actions.

In an instance, two containers of book retailing are compared based on nature of hyper specialization such as medical books, engineering books. In another instance, the comparison would be based on level of advancement of content such as retailer with basic books and retailer with advanced books. In another instance, for apparel retailers, specialization would be based on the unique design pattern in the apparel carried by respective specialty retail store. Thus, hyper specialization exists for every specialty retailing and the specialty context arrived by system by feedback mechanism and the enriched content in the container is rich in contextual embedding and it is capable of mirroring human like understanding while identifying the gap in assortment based on specialty context.

List of items identified in the previous step are displayed as suggestions for the user to be considered for retail value chain such as online assortment, procurement, manufacturing, pricing, advertisement and the like. In an instance, retail specialization engine is linked with other modules of the system such as procurement module and list of items are displayed as suggestion to be considered for procurement. In an instance, retail specialization engine is linked with other modules such as online assortment analytical system and list of items are displayed as suggestion to be considered for assortment, and analyst may finalize the list of items for a category for the next session for online assortment based on many criteria including the list of items suggested by retail specialization engine.

The online assortment analytical system may be linked with other systems associated with procurement, manufacturing, advertisement and the like. Based on the feedback received from the associated systems the online assortment analytical system may revise the suggestions, and it is continuous changing process by considering the suggestion from retail specialization engine.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of the present disclosure herein address unresolved problems of incomplete inputs for store specific competitive strategies. In competitive retailing, specialty competitive stores which are located in the trade area of a specialty retailer store need to be considered for competitive strategies. In practice lot of competitive specialty stores in the trade area are left out due to practical difficulties, their lesser popularity, lower size and smaller business volume and the like, and it leads to incomplete inputs for store specific competitive strategies.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor-implemented method (300) comprising:
receiving (302), via an Input/Output (I/O) interface, location of a retail specialty store of a retailer;
determining (304), via one or more hardware processors, a plurality of unknown stores within a predefined trade area of the retail specialty store using a web mapping platform, wherein the predefined trade area depends on a category of the retail specialty store;
identifying (306), via one or more hardware processors, an e-commerce website of each of the plurality of unknown stores and the retailer specialty store using a web crawling technique;
obtaining (308), via one or more hardware processors, one or more details of an e-commerce website of each of the plurality of unknown stores and the retailer specialty store, wherein the one or more details include an information associated with one or more items, a price, an image, and a video of each of the one or more items and a visionary statement explaining core value of the plurality of unknown stores and the retailer specialty store;
storing (310), via the one or more hardware processors, the obtained one or more details of the ecommerce website of each of plurality of unknown stores and the retailer specialty store into an individual specific containers separately in an unstructured format;
enhancing (312), via the one or more hardware processors, the content of each container by applying iteratively at least one contextual embedding technique, wherein the at least one contextual technique includes a Bidirectional Encoder Representations from Transformers (BERT), and Named-entity recognition (NER);
computing (314), via the one or more hardware processors, a dynamic cosine similarity for any two containers to the content of which dynamic enrichment was applied through at least one technique such as contextual embedding and the like and repeating to all pairwise containers to derive a dynamic cosine similarity matrix;
identifying (316), via the one or more hardware processors, one or more latent variables, cumulative variance contribution and one or more factor loadings by applying a principal component analysis (PCA) on the computed dynamic cosine similarity matrix;
maximizing (318), via the one or more hardware processors, the identified cumulative variance contribution to select an ideal enriched content from each container of the plurality of unknown stores and the retailer specialty store and store into an associated enriched retrieval augmented generation (RAG) file; and
performing (320), via the one or more hardware processors, a plurality of tasks associated with specialty retailing using the selected ideal enriched content of one store among the unknown stores and the retailer specialty store, wherein the plurality of tasks includes (a) getting response with improved relevance to GenAI queries related with one store among the plurality unknown stores and the retailer specialty store, and (b) locating gap in online assortment for the retailer specialty store.

2. The processor-implemented method (300) as claimed in claim 1, comprising:
analyzing (402), via the one or more hardware processors, the identified one or more latent variables, and one or more the factor loadings to derive intention of the plurality of unknown stores within the predefined trade area of the location of the retail specialty store;
identifying (404), via the one or more hardware processors, at least one competitive store and level of competition by determining position of the plurality of unknown stores within latent variable based on the specialization type, magnitude of the one or more factor loadings, wherein the magnitude of factor loading and distinct specialization type are considered to place the plurality of unknown stores in the top position of the competitive stores list;
observing (406), via the one or more hardware processors, a difference between the identified at least one competitive store and the specialty retail store by applying the multimodal GenAI models on each category of corresponding the first set of containers and the second set of containers with enriched contents; and
generating (408), via the one or more hardware processors, one or more recommendations based on the observed difference between the identified at least one competitive store and the specialty retail store using the enriched contents, wherein the generated one or more recommendations are displayed to an end user for executing one or more corrective actions.

3. The processor-implemented method (300) as claimed in claim 1, wherein the plurality of tasks comprising:
getting response with improved relevance to GenAI queries related with one store among the plurality unknown stores and the retailer specialty store by applying GenAI in which the improved relevancy is measured in comparison to the response received from text without enrichment; and
locating gap in online assortment for the retailer specialty store using the enriched RAG files with enriched content and to identify the position of the retail specialty store with respect to specialization in the trade area.

4. The processor-implemented method (300) as claimed in claim 1,
wherein the one or more latent variables represent the type of specialization of the plurality of stores including unknown stores and retailer store in which the plurality of stores having specific type of items form a latent variable; and
wherein the latent variables with the specialty retailer store is identified and the plurality of unknown stores in the identified latent variable are the competitive stores and level of competition is identified from magnitude of factor loading of each unknown stores within the identified latent variable.

5. The processor-implemented method (300) as claimed in claim 1, wherein the maximizing of cumulative variance contribution enables:
enriching the content of container in two phases such as (i) in initial phase, enrichment happens within the scope defined as prompts in prompt engineering and to move towards natural grouping that exist among the specialty stores and (ii) in later phase, enrichment happens automatically towards hyper specialization that exist naturally among the stores;
maximizing depth of differentiation among the stores with respect to specialization; and
enriching the content by the direction of existing groups among the stores in the form of specialization.

6. A system (100) comprising:
a memory (110) storing instructions;
one or more Input/Output (I/O) interfaces (104); and
one or more hardware processors (108) coupled to the memory (110) via the one or more I/O interfaces (104), wherein the one or more hardware processors (108) are configured by the instructions to:
receive location of a retail specialty store of a retailer;
determine a plurality of unknown stores within a predefined trade area of the retail specialty store using a web mapping platform, wherein the predefined trade area depends on a category of the retail specialty store;
identify an e-commerce website of each of the plurality of unknown stores and the retailer specialty store using a web crawling technique;
obtain one or more details of an e-commerce website of each of the plurality of unknown stores and the retailer specialty store, wherein the one or more details include an information associated with one or more items, a price, an image, and a video of each of the one or more items and a visionary statement explaining core value of the plurality of unknown stores and the retailer specialty store;
store the obtained one or more details of the ecommerce website of each of plurality of unknown stores and the retailer specialty store into an individual specific containers separately in an unstructured format;
enhance the content of each container by applying iteratively at least one contextual embedding technique, wherein the at least one contextual technique includes a Bidirectional Encoder Representations from Transformers (BERT), and Named-entity recognition (NER);
compute a dynamic cosine similarity for any two containers to the content of which dynamic enrichment was applied through at least one technique such as contextual embedding and the like and repeating to all pairwise containers to derive a dynamic cosine similarity matrix;
identify one or more latent variables, cumulative variance contribution and one or more factor loadings by applying a principal component analysis (PCA) on the computed dynamic cosine similarity matrix;
maximize the identified cumulative variance contribution to select an ideal enriched content from each container of the plurality of unknown stores and the retailer specialty store and store into an associated enriched retrieval augmented generation (RAG) file; and
perform a plurality of tasks associated with specialty retailing using the selected ideal enriched content of one store among the unknown stores and the retailer specialty store, wherein the plurality of tasks includes (a) getting response with improved relevance to GenAI queries related with one store among the plurality unknown stores and the retailer specialty store, and (b) locating gap in online assortment for the retailer specialty store.

7. The system (100) as claimed in claim 6, wherein the one or more hardware processors (108) are configured by the instructions to:
analyze the identified one or more latent variables, and one or more the factor loadings to derive intention of the plurality of unknown stores within the predefined trade area of the location of the retail specialty store;
identify at least one competitive store and level of competition by determining position of the plurality of unknown stores within latent variable based on the specialization type, magnitude of the one or more factor loadings, wherein the magnitude of factor loading and distinct specialization type are considered to place the plurality of unknown stores in the top position of the competitive stores list;
observe a difference between the identified at least one competitive store and the specialty retail store by applying the multimodal GenAI models on each category of corresponding the first set of containers and the second set of containers with enriched contents; and
generate one or more recommendations based on the observed difference between the identified at least one competitive store and the specialty retail store using the enriched contents, wherein the generated one or more recommendations are displayed to an end user for executing one or more corrective actions.

8. The system (100) as claimed in claim 6, wherein the plurality of tasks comprising:
getting response with improved relevance to GenAI queries related with one store among the unknown stores and the retailer specialty store by applying GenAI in which the improved relevancy is measured in comparison to the response received from text without enrichment; and
locating gap in online assortment for the retailer store using the RAG files with enriched content and to identify the position of the retail specialty store with respect to specialization in the trade area.

9. The system (100) as claimed in claim 6,
wherein the one or more latent variables represent the type of specialization of the plurality of stores including unknown stores and retailer store in which the plurality of stores having specific type of items form a latent variable.
wherein the latent variables with the specialty retailer store is identified and the plurality of unknown stores in the identified latent variable are the competitive stores and level of competition is identified from magnitude of factor loading of each unknown stores within the identified latent variable.

10. The system (100) as claimed in claim 6, wherein the maximizing of cumulative variance contribution enables:
enriching the content of container in two phases such as (i) in initial phase, enrichment happens within the scope defined as prompts in prompt engineering and to move towards natural grouping that exist among the specialty stores and (ii) in later phase, enrichment happens automatically towards hyper specialization that exist naturally among the stores;
maximizing depth of differentiation among the stores with respect to specialization; and
enriching the content by the direction of existing groups among the stores in the form of specialization.

11. One or more non-transitory machine-readable information storage mediums comprising one or more instructions which when executed by one or more hardware processors cause:
receiving, via an Input/Output (I/O) interface, location of a retail specialty store of a retailer;
determining, a plurality of unknown stores within a predefined trade area of the retail specialty store using a web mapping platform, wherein the predefined trade area depends on a category of the retail specialty store;
identifying an e-commerce website of each of the plurality of unknown stores and the retailer specialty store using a web crawling technique;
obtaining one or more details of an e-commerce website of each of the plurality of unknown stores and the retailer specialty store, wherein the one or more details include an information associated with one or more items, a price, an image, and a video of each of the one or more items and a visionary statement explaining core value of the plurality of unknown stores and the retailer specialty store;
storing the obtained one or more details of the ecommerce website of each of plurality of unknown stores and the retailer specialty store into an individual specific containers separately in an unstructured format;
enhancing the content of each container by applying iteratively at least one contextual embedding technique, wherein the at least one contextual technique includes a Bidirectional Encoder Representations from Transformers (BERT), and Named-entity recognition (NER);
computing a dynamic cosine similarity for any two containers to the content of which dynamic enrichment was applied through at least one technique such as contextual embedding and the like and repeating to all pairwise containers to derive a dynamic cosine similarity matrix;
identifying one or more latent variables, cumulative variance contribution and one or more factor loadings by applying a principal component analysis (PCA) on the computed dynamic cosine similarity matrix;
maximizing the identified cumulative variance contribution to select an ideal enriched content from each container of the plurality of unknown stores and the retailer specialty store and store into an associated enriched retrieval augmented generation (RAG) file; and
performing a plurality of tasks associated with specialty retailing using the selected ideal enriched content of one store among the unknown stores and the retailer specialty store, wherein the plurality of tasks includes (a) getting response with improved relevance to GenAI queries related with one store among the plurality unknown stores and the retailer specialty store, and (b) locating gap in online assortment for the retailer specialty store.

12. The one or more non-transitory machine-readable information storage mediums as claimed in claim 11, wherein the one or more instructions which when executed by the one or more hardware processors further cause:
analyzing the identified one or more latent variables, and one or more the factor loadings to derive intention of the plurality of unknown stores within the predefined trade area of the location of the retail specialty store;
identifying at least one competitive store and level of competition by determining position of the plurality of unknown stores within latent variable based on the specialization type, magnitude of the one or more factor loadings, wherein the magnitude of factor loading and distinct specialization type are considered to place the plurality of unknown stores in the top position of the competitive stores list;
observing a difference between the identified at least one competitive store and the specialty retail store by applying the multimodal GenAI models on each category of corresponding the first set of containers and the second set of containers with enriched contents; and
generating one or more recommendations based on the observed difference between the identified at least one competitive store and the specialty retail store using the enriched contents, wherein the generated one or more recommendations are displayed to an end user for executing one or more corrective actions.

13. The one or more non-transitory machine-readable information storage mediums as claimed in claim 11, wherein the one or more instructions which when executed by the one or more hardware processors further cause:
getting response with improved relevance to GenAI queries related with one store among the plurality unknown stores and the retailer specialty store by applying GenAI in which the improved relevancy is measured in comparison to the response received from text without enrichment; and
locating gap in online assortment for the retailer specialty store using the enriched RAG files with enriched content and to identify the position of the retail specialty store with respect to specialization in the trade area.

14. The one or more non-transitory machine-readable information storage mediums as claimed in claim 11,
wherein the one or more latent variables represent the type of specialization of the plurality of stores including unknown stores and retailer store in which the plurality of stores having specific type of items form a latent variable.
wherein the latent variables with the specialty retailer store is identified and the plurality of unknown stores in the identified latent variable are the competitive stores and level of competition is identified from magnitude of factor loading of each unknown stores within the identified latent variable.

15. The one or more non-transitory machine-readable information storage mediums as claimed in claim 11, wherein the maximizing of cumulative variance contribution enables:
enriching the content of container in two phases such as (i) in initial phase, enrichment happens within the scope defined as prompts in prompt engineering and to move towards natural grouping that exist among the specialty stores and (ii) in later phase, enrichment happens automatically towards hyper specialization that exist naturally among the stores;
maximizing depth of differentiation among the stores with respect to specialization; and
enriching the content by the direction of existing groups among the stores in the form of specialization.

## Patentansprüche

1. Prozessorimplementiertes Verfahren (300), umfassend:
Empfangen (302), über eine Eingabe/Ausgabe(E/A)-Schnittstelle, des Standorts eines Einzelhandelsspezialgeschäfts eines Einzelhändlers;
Bestimmen (304), über einen oder mehrere Hardwareprozessoren, einer Mehrzahl unbekannter Geschäfte innerhalb eines vordefinierten Handelsbereichs des Einzelhandelsspezialgeschäfts unter Verwendung einer Web-Mapping-Plattform, wobei der vordefinierte Handelsbereich von einer Kategorie des Einzelhandelsspezialgeschäfts abhängt;
Identifizieren (306), über einen oder mehrere Hardwareprozessoren, einer E-Commerce-Website jedes der Mehrzahl unbekannter Geschäfte und des Einzelhändlerspezialgeschäfts unter Verwendung einer Web-Crawling-Technik;
Erhalten (308), über einen oder mehrere Hardwareprozessoren, eines oder mehrerer Details einer E-Commerce-Website jedes der Mehrzahl unbekannter Geschäfte und des Einzelhändlerspezialgeschäfts, wobei das eine oder die mehreren Details Informationen, die einem oder mehreren Artikeln zugeordnet sind, einen Preis, ein Bild und ein Video jedes des einen oder der mehreren Artikel und eine visionäre Aussage, die den Kernwert der Mehrzahl unbekannter Geschäfte und des Einzelhändlerspezialgeschäfts erläutert, beinhalten;
Speichern (310), über den einen oder die mehreren Hardwareprozessoren, des erhaltenen einen oder der erhaltenen mehreren Details der E-Commerce-Website jedes der Mehrzahl unbekannter Geschäfte und des Einzelhändlerspezialgeschäfts in einem einzelnen spezifischen Container separat in einem unstrukturierten Format;
Verbessern (312), über den einen oder die mehreren Hardwareprozessoren, des Inhalts jedes Containers durch iteratives Anwenden mindestens einer kontextuellen Einbettungstechnik, wobei die mindestens eine kontextuelle Technik eine bidirektionale Codiererdarstellungen von Transformatoren (BERT) und eine Named-Entity-Recognition (NER) beinhaltet;
Berechnen (314), über den einen oder die mehreren Hardwareprozessoren, einer dynamischen Kosinusähnlichkeit für zwei beliebige Container, deren Inhalt durch mindestens eine Technik wie kontextuelle Einbettung und dergleichen dynamisch angereichert wurde, und Wiederholen aller paarweisen Container, um eine dynamische Kosinusähnlichkeitsmatrix abzuleiten;
Identifizieren (316), über den einen oder die mehreren Hardwareprozessoren, einer oder mehrerer latenter Variablen, eines kumulativen Varianzbeitrags und einer oder mehrerer Faktorladungen durch Anwenden einer Hauptkomponentenanalyse (PCA) auf die berechnete dynamische Kosinusähnlichkeitsmatrix;
Maximieren (318), über den einen oder die mehreren Hardwareprozessoren, des identifizierten kumulativen Varianzbeitrags, um einen idealen angereicherten Inhalt aus jedem Container der Mehrzahl unbekannter Geschäfte und des Einzelhändlerspezialgeschäfts auszuwählen, und das Speichern in einer zugehörigen angereicherten Retrieval-Augmented-Generation(RAG)-Datei; und
Durchführen (320), über den einen oder die mehreren Hardwareprozessoren, einer Mehrzahl von Aufgaben im Zusammenhang mit dem Spezialeinzelhandel unter Verwendung des ausgewählten idealen angereicherten Inhalts eines Geschäfts unter den unbekannten Geschäften und dem Einzelhändlerspezialgeschäft, wobei die Mehrzahl von Aufgaben (a) Erhalten einer Antwort mit verbesserter Relevanz auf GenAI-Abfragen in Bezug auf ein Geschäft unter der Mehrzahl unbekannter Geschäfte und dem Einzelhändlerspezialgeschäft und (b) Lokalisieren von Lücken in der Online-Zusammenstellung für das Einzelhändlerspezialgeschäft beinhaltet.

2. Prozessorimplementiertes Verfahren (300) nach Anspruch 1, umfassend:
Analysieren (402), über den einen oder die mehreren Hardwareprozessoren, der identifizierten einen oder der identifizierten mehreren latenten Variablen und der einen oder der mehreren Faktorladungen, um die Absicht der Mehrzahl unbekannter Geschäfte innerhalb des vordefinierten Handelsbereichs des Standorts des Einzelhandelsspezialgeschäfts abzuleiten;
Identifizieren (404), über den einen oder die mehreren Hardwareprozessoren, mindestens eines wettbewerbsfähigen Geschäfts und des Wettbewerbsgrads durch Bestimmen der Position der Mehrzahl unbekannter Geschäfte innerhalb der latenten Variablen basierend auf der Spezialisierungsart und der Größe der einen oder der mehreren Faktorladungen, wobei die Größe der Faktorladung und die unterschiedliche Spezialisierungsart berücksichtigt werden, um die Mehrzahl unbekannter Geschäfte in die oberste Position der Liste wettbewerbsfähiger Geschäfte zu platzieren;
Beobachten (406), über den einen oder die mehreren Hardwareprozessoren, eines Unterschieds zwischen dem identifizierten mindestens einen wettbewerbsfähigen Geschäft und dem Spezialeinzelhandelsgeschäft durch Anwenden der multimodalen GenAI-Modelle auf jede Kategorie des entsprechenden ersten Satzes von Containern und des zweiten Satzes von Containern mit angereichertem Inhalt; und
Erzeugen (408), über den einen oder die mehreren Hardwareprozessoren, einer oder mehrerer Empfehlungen basierend auf dem beobachteten Unterschied zwischen dem identifizierten mindestens einen wettbewerbsfähigen Geschäft und dem Spezialeinzelhandelsgeschäft unter Verwendung des angereicherten Inhalts, wobei die erzeugte eine oder die erzeugten mehreren Empfehlungen einem Endbenutzer zum Ausführen einer oder mehrerer Korrekturmaßnahmen angezeigt werden.

3. Prozessorimplementiertes Verfahren (300) nach Anspruch 1, wobei die Mehrzahl von Aufgaben umfasst:
Erhalten einer Antwort mit verbesserter Relevanz auf GenAI-Abfragen in Bezug auf ein Geschäft unter der Mehrzahl unbekannter Geschäfte und dem Einzelhändlerspezialgeschäft durch Anwenden von GenAI, in dem die verbesserte Relevanz im Vergleich zu der von Text ohne Anreicherung empfangenen Antwort gemessen wird; und
Lokalisieren von Lücken in der Online-Zusammenstellung für das Einzelhändlerspezialgeschäft unter Verwendung der angereicherten RAG-Dateien mit angereichertem Inhalt und Identifizieren der Position des Einzelhandelsspezialgeschäfts in Bezug auf die Spezialisierung im Handelsbereich.

4. Prozessorimplementiertes Verfahren (300) nach Anspruch 1,
wobei die eine oder die mehreren latenten Variablen die Art der Spezialisierung der Mehrzahl von Geschäften darstellen, einschließlich unbekannter Geschäfte und Einzelhandelsgeschäfte, in denen die Mehrzahl von Geschäften mit einer spezifischen Art von Artikeln eine latente Variable bilden; und
wobei die latenten Variablen mit dem Spezialeinzelhandelsgeschäft identifiziert werden und die Mehrzahl unbekannter Geschäfte in der identifizierten latenten Variable die wettbewerbsfähigen Geschäfte sind und der Wettbewerbsgrad aus der Größe der Faktorladung jedes unbekannten Geschäfts innerhalb der identifizierten latenten Variable identifiziert wird.

5. Prozessorimplementiertes Verfahren (300) nach Anspruch 1, wobei das Maximieren des kumulativen Varianzbeitrags ermöglicht:
Anreichern des Inhalts des Containers in zwei Phasen, wie (i) in der Anfangsphase erfolgt die Anreicherung innerhalb des Umfangs, der als Aufforderungen beim prompten Engineering definiert ist, und um sich zu einer natürlichen Gruppierung zu bewegen, die unter den Spezialgeschäften existiert, und (ii) in der späteren Phase erfolgt die Anreicherung automatisch zu einer Hyperspezialisierung, die natürlich unter den Geschäften existiert;
Maximieren der Tiefe der Differenzierung unter den Geschäften in Bezug auf die Spezialisierung; und
Anreichern des Inhalts durch die Richtung bestehender Gruppen unter den Geschäften in Form der Spezialisierung.

6. System (100), umfassend:
einen Speicher (110), der Anweisungen speichert;
eine oder mehrere Eingabe/Ausgabe(E/A)-Schnittstellen (104); und
einen oder mehrere Hardwareprozessoren (108), die über die eine oder die mehreren E/A-Schnittstellen (104) mit dem Speicher (110) gekoppelt sind, wobei der eine oder die mehreren Hardwareprozessoren (108) durch die Anweisungen konfiguriert sind zum:
Empfangen des Standorts eines Einzelhandelsspezialgeschäfts eines Einzelhändlers;
Bestimmen einer Mehrzahl unbekannter Geschäfte innerhalb eines vordefinierten Handelsbereichs des Einzelhandelsspezialgeschäfts unter Verwendung einer Web-Mapping-Plattform, wobei der vordefinierte Handelsbereich von einer Kategorie des Einzelhandelsspezialgeschäfts abhängt;
Identifizieren einer E-Commerce-Website jedes der Mehrzahl unbekannter Geschäfte und des Einzelhändlerspezialgeschäfts unter Verwendung einer Web-Crawling-Technik;
Erhalten eines oder mehrerer Details einer E-Commerce-Website jedes der Mehrzahl unbekannter Geschäfte und des Einzelhändlerspezialgeschäfts, wobei das eine oder die mehreren Details Informationen, die einem oder mehreren Artikeln zugeordnet sind, einen Preis, ein Bild und ein Video jedes des einen oder der mehreren Artikel und eine visionäre Aussage, die den Kernwert der Mehrzahl unbekannter Geschäfte und des Einzelhändlerspezialgeschäfts erläutert, beinhalten;
Speichern des erhaltenen einen oder der erhaltenen mehreren Details der E-Commerce-Website jedes der Mehrzahl unbekannter Geschäfte und des Einzelhändlerspezialgeschäfts in einem einzelnen spezifischen Container separat in einem unstrukturierten Format;
Verbessern des Inhalts jedes Containers durch iteratives Anwenden mindestens einer kontextuellen Einbettungstechnik, wobei die mindestens eine kontextuelle Technik eine bidirektionale Codiererdarstellungen von Transformatoren (BERT) und eine Named-Entity-Recognition (NER) beinhaltet;
Berechnen einer dynamischen Kosinusähnlichkeit für zwei beliebige Container, deren Inhalt durch mindestens eine Technik wie kontextuelle Einbettung und dergleichen dynamisch angereichert wurde, und Wiederholen aller paarweisen Container, um eine dynamische Kosinusähnlichkeitsmatrix abzuleiten;
Identifizieren einer oder mehrerer latenter Variablen, eines kumulativen Varianzbeitrags und einer oder mehrerer Faktorladungen durch Anwenden einer Hauptkomponentenanalyse (PCA) auf die berechnete dynamische Kosinusähnlichkeitsmatrix;
Maximieren des identifizierten kumulativen Varianzbeitrags, um einen idealen angereicherten Inhalt aus jedem Container der Mehrzahl unbekannter Geschäfte und des Einzelhändlerspezialgeschäfts auszuwählen, und das Speichern in einer zugehörigen angereicherten Retrieval-Augmented-Generation(RAG)-Datei; und
Durchführen einer Mehrzahl von Aufgaben im Zusammenhang mit dem Spezialeinzelhandel unter Verwendung des ausgewählten idealen angereicherten Inhalts eines Geschäfts unter den unbekannten Geschäften und dem Einzelhändlerspezialgeschäft, wobei die Mehrzahl von Aufgaben (a) Erhalten einer Antwort mit verbesserter Relevanz auf GenAI-Abfragen in Bezug auf ein Geschäft unter der Mehrzahl unbekannter Geschäfte und dem Einzelhändlerspezialgeschäft und (b) Lokalisieren von Lücken in der Online-Zusammenstellung für das Einzelhändlerspezialgeschäft beinhaltet.

7. System (100) nach Anspruch 6, wobei der eine oder die mehreren Hardwareprozessoren (108) durch die Anweisungen konfiguriert sind zum:
Analysieren der identifizierten einen oder der identifizierten mehreren latenten Variablen und der einen oder der mehreren Faktorladungen, um die Absicht der Mehrzahl unbekannter Geschäfte innerhalb des vordefinierten Handelsbereichs des Standorts des Einzelhandelsspezialgeschäfts abzuleiten;
Identifizieren mindestens eines wettbewerbsfähigen Geschäfts und des Wettbewerbsgrads durch Bestimmen der Position der Mehrzahl unbekannter Geschäfte innerhalb der latenten Variablen basierend auf der Spezialisierungsart und der Größe der einen oder der mehreren Faktorladungen, wobei die Größe der Faktorladung und die unterschiedliche Spezialisierungsart berücksichtigt werden, um die Mehrzahl unbekannter Geschäfte in die oberste Position der Liste wettbewerbsfähiger Geschäfte zu platzieren;
Beobachten eines Unterschieds zwischen dem identifizierten mindestens einen wettbewerbsfähigen Geschäft und dem Spezialeinzelhandelsgeschäft durch Anwenden der multimodalen GenAI-Modelle auf jede Kategorie des entsprechenden ersten Satzes von Containern und des zweiten Satzes von Containern mit angereichertem Inhalt; und
Erzeugen einer oder mehrerer Empfehlungen basierend auf dem beobachteten Unterschied zwischen dem identifizierten mindestens einen wettbewerbsfähigen Geschäft und dem Spezialeinzelhandelsgeschäft unter Verwendung des angereicherten Inhalts, wobei die erzeugte eine oder die erzeugten mehreren Empfehlungen einem Endbenutzer zum Ausführen einer oder mehrerer Korrekturmaßnahmen angezeigt werden.

8. System (100) nach Anspruch 6, wobei die Mehrzahl von Aufgaben umfasst:
Erhalten einer Antwort mit verbesserter Relevanz auf GenAI-Abfragen in Bezug auf ein Geschäft unter den unbekannten Geschäften und dem Einzelhändlerspezialgeschäft durch Anwenden von GenAI, in dem die verbesserte Relevanz im Vergleich zu der von Text ohne Anreicherung empfangenen Antwort gemessen wird; und
Lokalisieren von Lücken in der Online-Zusammenstellung für das Einzelhändlergeschäft unter Verwendung der RAG-Dateien mit angereichertem Inhalt und Identifizieren der Position des Einzelhandelsspezialgeschäfts in Bezug auf die Spezialisierung im Handelsbereich.

9. System (100) nach Anspruch 6,
wobei die eine oder die mehreren latenten Variablen die Art der Spezialisierung der Mehrzahl von Geschäften darstellen, einschließlich unbekannter Geschäfte und Einzelhandelsgeschäfte, in denen die Mehrzahl von Geschäften mit einer spezifischen Art von Artikeln eine latente Variable bilden.
wobei die latenten Variablen mit dem Spezialeinzelhandelsgeschäft identifiziert werden und die Mehrzahl unbekannter Geschäfte in der identifizierten latenten Variable die wettbewerbsfähigen Geschäfte sind und der Wettbewerbsgrad aus der Größe der Faktorladung jedes unbekannten Geschäfts innerhalb der identifizierten latenten Variable identifiziert wird.

10. System (100) nach Anspruch 6, wobei das Maximieren des kumulativen Varianzbeitrags ermöglicht:
Anreichern des Inhalts des Containers in zwei Phasen, wie (i) in der Anfangsphase erfolgt die Anreicherung innerhalb des Umfangs, der als Aufforderungen beim prompten Engineering definiert ist, und um sich zu einer natürlichen Gruppierung zu bewegen, die unter den Spezialgeschäften existiert, und (ii) in der späteren Phase erfolgt die Anreicherung automatisch zu einer Hyperspezialisierung, die natürlich unter den Geschäften existiert;
Maximieren der Tiefe der Differenzierung unter den Geschäften in Bezug auf die Spezialisierung; und
Anreichern des Inhalts durch die Richtung bestehender Gruppen unter den Geschäften in Form der Spezialisierung.

11. Ein oder mehrere nichtflüchtige maschinenlesbare Informationsspeichermedien, die eine oder mehrere Anweisungen umfassen, die bei Ausführung durch einen oder mehrere Hardwareprozessoren bewirken:
Empfangen, über eine Eingabe/Ausgabe(E/A)-Schnittstelle, des Standorts eines Einzelhandelsspezialgeschäfts eines Einzelhändlers;
Bestimmen einer Mehrzahl unbekannter Geschäfte innerhalb eines vordefinierten Handelsbereichs des Einzelhandelsspezialgeschäfts unter Verwendung einer Web-Mapping-Plattform, wobei der vordefinierte Handelsbereich von einer Kategorie des Einzelhandelsspezialgeschäfts abhängt;
Identifizieren einer E-Commerce-Website jedes der Mehrzahl unbekannter Geschäfte und des Einzelhändlerspezialgeschäfts unter Verwendung einer Web-Crawling-Technik;
Erhalten eines oder mehrerer Details einer E-Commerce-Website jedes der Mehrzahl unbekannter Geschäfte und des Einzelhändlerspezialgeschäfts, wobei das eine oder die mehreren Details Informationen, die einem oder mehreren Artikeln zugeordnet sind, einen Preis, ein Bild und ein Video jedes des einen oder der mehreren Artikel und eine visionäre Aussage, die den Kernwert der Mehrzahl unbekannter Geschäfte und des Einzelhändlerspezialgeschäfts erläutert, beinhalten;
Speichern des erhaltenen einen oder der erhaltenen mehreren Details der E-Commerce-Website jedes der Mehrzahl unbekannter Geschäfte und des Einzelhändlerspezialgeschäfts in einem einzelnen spezifischen Container separat in einem unstrukturierten Format;
Verbessern des Inhalts jedes Containers durch iteratives Anwenden mindestens einer kontextuellen Einbettungstechnik, wobei die mindestens eine kontextuelle Technik eine bidirektionale Codiererdarstellungen von Transformatoren (BERT) und eine Named-Entity-Recognition (NER) beinhaltet;
Berechnen einer dynamischen Kosinusähnlichkeit für zwei beliebige Container, deren Inhalt durch mindestens eine Technik wie kontextuelle Einbettung und dergleichen dynamisch angereichert wurde, und Wiederholen aller paarweisen Container, um eine dynamische Kosinusähnlichkeitsmatrix abzuleiten;
Identifizieren einer oder mehrerer latenter Variablen, eines kumulativen Varianzbeitrags und einer oder mehrerer Faktorladungen durch Anwenden einer Hauptkomponentenanalyse (PCA) auf die berechnete dynamische Kosinusähnlichkeitsmatrix;
Maximieren des identifizierten kumulativen Varianzbeitrags, um einen idealen angereicherten Inhalt aus jedem Container der Mehrzahl unbekannter Geschäfte und des Einzelhändlerspezialgeschäfts auszuwählen, und das Speichern in einer zugehörigen angereicherten Retrieval-Augmented-Generation(RAG)-Datei; und
Durchführen einer Mehrzahl von Aufgaben im Zusammenhang mit dem Spezialeinzelhandel unter Verwendung des ausgewählten idealen angereicherten Inhalts eines Geschäfts unter den unbekannten Geschäften und dem Einzelhändlerspezialgeschäft, wobei die Mehrzahl von Aufgaben (a) Erhalten einer Antwort mit verbesserter Relevanz auf GenAI-Abfragen in Bezug auf ein Geschäft unter der Mehrzahl unbekannter Geschäfte und dem Einzelhändlerspezialgeschäft und (b) Lokalisieren von Lücken in der Online-Zusammenstellung für das Einzelhändlerspezialgeschäft beinhaltet.

12. Ein oder mehrere nichtflüchtige maschinenlesbare Informationsspeichermedien nach Anspruch 11, wobei die eine oder die mehreren Anweisungen, die bei Ausführung durch den einen oder die mehreren Hardwareprozessoren ferner bewirken:
Analysieren der identifizierten einen oder der identifizierten mehreren latenten Variablen und der einen oder der mehreren Faktorladungen, um die Absicht der Mehrzahl unbekannter Geschäfte innerhalb des vordefinierten Handelsbereichs des Standorts des Einzelhandelsspezialgeschäfts abzuleiten;
Identifizieren mindestens eines wettbewerbsfähigen Geschäfts und des Wettbewerbsgrads durch Bestimmen der Position der Mehrzahl unbekannter Geschäfte innerhalb der latenten Variablen basierend auf der Spezialisierungsart und der Größe der einen oder der mehreren Faktorladungen, wobei die Größe der Faktorladung und die unterschiedliche Spezialisierungsart berücksichtigt werden, um die Mehrzahl unbekannter Geschäfte in die oberste Position der Liste wettbewerbsfähiger Geschäfte zu platzieren;
Beobachten eines Unterschieds zwischen dem identifizierten mindestens einen wettbewerbsfähigen Geschäft und dem Spezialeinzelhandelsgeschäft durch Anwenden der multimodalen GenAI-Modelle auf jede Kategorie des entsprechenden ersten Satzes von Containern und des zweiten Satzes von Containern mit angereichertem Inhalt; und
Erzeugen einer oder mehrerer Empfehlungen basierend auf dem beobachteten Unterschied zwischen dem identifizierten mindestens einen wettbewerbsfähigen Geschäft und dem Spezialeinzelhandelsgeschäft unter Verwendung des angereicherten Inhalts, wobei die erzeugte eine oder die erzeugten mehreren Empfehlungen einem Endbenutzer zum Ausführen einer oder mehrerer Korrekturmaßnahmen angezeigt werden.

13. Ein oder mehrere nichtflüchtige maschinenlesbare Informationsspeichermedien nach Anspruch 11, wobei die eine oder die mehreren Anweisungen, die bei Ausführung durch den einen oder die mehreren Hardwareprozessoren ferner bewirken:
Erhalten einer Antwort mit verbesserter Relevanz auf GenAI-Abfragen in Bezug auf ein Geschäft unter der Mehrzahl unbekannter Geschäfte und dem Einzelhändlerspezialgeschäft durch Anwenden von GenAI, in dem die verbesserte Relevanz im Vergleich zu der von Text ohne Anreicherung empfangenen Antwort gemessen wird; und
Lokalisieren von Lücken in der Online-Zusammenstellung für das Einzelhändlerspezialgeschäft unter Verwendung der angereicherten RAG-Dateien mit angereichertem Inhalt und Identifizieren der Position des Einzelhandelsspezialgeschäfts in Bezug auf die Spezialisierung im Handelsbereich.

14. Ein oder mehrere nichtflüchtige maschinenlesbare Informationsspeichermedien nach Anspruch 11,
wobei die eine oder die mehreren latenten Variablen die Art der Spezialisierung der Mehrzahl von Geschäften darstellen, einschließlich unbekannter Geschäfte und Einzelhandelsgeschäfte, in denen die Mehrzahl von Geschäften mit einer spezifischen Art von Artikeln eine latente Variable bilden.
wobei die latenten Variablen mit dem Spezialeinzelhandelsgeschäft identifiziert werden und die Mehrzahl unbekannter Geschäfte in der identifizierten latenten Variable die wettbewerbsfähigen Geschäfte sind und der Wettbewerbsgrad aus der Größe der Faktorladung jedes unbekannten Geschäfts innerhalb der identifizierten latenten Variable identifiziert wird.

15. Ein oder mehrere nichtflüchtige maschinenlesbare Informationsspeichermedien nach Anspruch 11, wobei das Maximieren des kumulativen Varianzbeitrags ermöglicht:
Anreichern des Inhalts des Containers in zwei Phasen, wie (i) in der Anfangsphase erfolgt die Anreicherung innerhalb des Umfangs, der als Aufforderungen beim prompten Engineering definiert ist, und um sich zu einer natürlichen Gruppierung zu bewegen, die unter den Spezialgeschäften existiert, und (ii) in der späteren Phase erfolgt die Anreicherung automatisch zu einer Hyperspezialisierung, die natürlich unter den Geschäften existiert;
Maximieren der Tiefe der Differenzierung unter den Geschäften in Bezug auf die Spezialisierung; und
Anreichern des Inhalts durch die Richtung bestehender Gruppen unter den Geschäften in Form der Spezialisierung.

## Revendications

1. Procédé mis en œuvre par processeur (300) comprenant :
la réception (302), par l'intermédiaire d'une interface d'entrée/sortie (E/S), de l'emplacement d'un magasin spécialisé de détail d'un détaillant ;
la détermination (304), par l'intermédiaire d'un ou plusieurs processeurs matériels, d'une pluralité de magasins inconnus dans une zone de chalandise prédéfinie du magasin spécialisé de détail à l'aide d'une plateforme de cartographie en ligne, dans lequel la zone de chalandise prédéfinie dépend d'une catégorie du magasin spécialisé de détail ;
l'identification (306), par l'intermédiaire d'un ou plusieurs processeurs matériels, d'un site web de commerce électronique de chacun de la pluralité de magasins inconnus et du magasin spécialisé de détail à l'aide d'une technique d'exploration Web ;
l'obtention (308), par l'intermédiaire d'un ou plusieurs processeurs matériels, d'un ou plusieurs détails d'un site web de commerce électronique de chacun de la pluralité de magasins inconnus et du magasin spécialisé de détail, dans lequel les un ou plusieurs détails comportent une information associée à un ou plusieurs éléments, un prix, une image et une vidéo de chacun des un ou plusieurs éléments et une déclaration visionnaire expliquant la valeur centrale de la pluralité de magasins inconnus et du magasin spécialisé de détail ;
le stockage (310), par l'intermédiaire des un ou plusieurs processeurs matériels, des un ou plusieurs détails obtenus du site web de commerce électronique de chacun de la pluralité de magasins inconnus et du magasin spécialisé de détail dans des conteneurs spécifiques distincts, séparément et dans un format non structuré ;
l'amélioration (312), par l'intermédiaire des un ou plusieurs processeurs matériels, du contenu de chaque conteneur en appliquant de manière itérative au moins une technique de plongement contextuel, dans lequel l'au moins une technique contextuelle comporte le modèle BERT (Bidirectional Encoder Representations from Transformers) et la reconnaissance d'entités nommées (NER) ;
le calcul (314), par l'intermédiaire des un ou plusieurs processeurs matériels, d'une similarité cosinus dynamique pour deux conteneurs quelconques au contenu dont l'enrichissement dynamique a été appliqué par l'intermédiaire d'au moins une technique telle qu'un plongement contextuel et similaire et une répétition sur tous les conteneurs par paires pour dériver une matrice de similarité cosinus dynamique ;
l'identification (316), par l'intermédiaire des un ou plusieurs processeurs matériels, d'une ou plusieurs variables latentes, d'une contribution de variance cumulée et d'une ou plusieurs charges factorielles en appliquant une analyse en composantes principales (PCA) sur la matrice de similarité cosinus dynamique calculée ;
la maximisation (318), par l'intermédiaire des un ou plusieurs processeurs matériels, de la contribution de variance cumulée identifiée pour sélectionner un contenu enrichi idéal à partir de chaque conteneur de la pluralité de magasins inconnus et du magasin spécialisé de détail et le stocker dans un fichier associé de génération augmentée par récupération (RAG) enrichi ; et
la réalisation (320), par l'intermédiaire des un ou plusieurs processeurs matériels, d'une pluralité de tâches associées au détail spécialisé à l'aide du contenu enrichi idéal sélectionné d'un magasin parmi les magasins inconnus et le magasin spécialisé de détail, dans lequel la pluralité de tâches comporte (a) l'obtention d'une réponse avec une pertinence améliorée à des requêtes GenAI liées à un magasin parmi la pluralité de magasins inconnus et le magasin spécialisé de détail, et (b) la localisation d'un écart dans un assortiment en ligne pour le magasin spécialisé de détail.

2. Procédé mis en œuvre par processeur (300) selon la revendication 1, comprenant :
l'analyse (402), par l'intermédiaire des un ou plusieurs processeurs matériels, des une ou plusieurs variables latentes identifiées, et d'une ou plusieurs des charges factorielles pour dériver une intention de la pluralité de magasins inconnus dans la zone de chalandise prédéfinie de l'emplacement du magasin spécialisé de détail ;
l'identification (404), par l'intermédiaire des un ou plusieurs processeurs matériels, d'au moins un magasin concurrent et d'un niveau de concurrence en déterminant la position de la pluralité de magasins inconnus dans une variable latente sur la base du type de spécialisation, de l'amplitude des une ou plusieurs charges factorielles, dans lequel l'amplitude de charge factorielle et le type de spécialisation distinct sont considérés pour placer la pluralité de magasins inconnus dans la position supérieure de la liste de magasins concurrents ;
l'observation (406), par l'intermédiaire des un ou plusieurs processeurs matériels, d'une différence entre l'au moins un magasin concurrent identifié et le magasin spécialisé de détail en appliquant les modèles GenAI multimodaux sur chaque catégorie du premier ensemble de conteneurs et du second ensemble de conteneurs correspondants avec un contenu enrichi ; et
la génération (408), par l'intermédiaire des un ou plusieurs processeurs matériels, d'une ou plusieurs recommandations sur la base de la différence observée entre l'au moins un magasin concurrent identifié et le magasin spécialisé de détail à l'aide du contenu enrichi, dans lequel les une ou plusieurs recommandations générées sont affichées à un utilisateur final pour exécuter une ou plusieurs actions correctives.

3. Procédé mis en œuvre par processeur (300) selon la revendication 1, dans lequel la pluralité de tâches comprend :
l'obtention d'une réponse avec une pertinence améliorée à des requêtes GenAI liées à un magasin parmi la pluralité de magasins inconnus et le magasin spécialisé de détail en appliquant GenAI dans lequel la pertinence améliorée est mesurée par rapport à la réponse reçue à partir d'un texte sans enrichissement ; et
la localisation d'un écart dans un assortiment en ligne pour le magasin spécialisé de détail à l'aide des fichiers RAG enrichis avec un contenu enrichi et pour identifier la position du magasin spécialisé de détail par rapport à la spécialisation dans la zone de chalandise.

4. Procédé mis en œuvre par processeur (300) selon la revendication 1,
dans lequel les une ou plusieurs variables latentes représentent le type de spécialisation de la pluralité de magasins comportant des magasins inconnus et le magasin du détaillant dans lequel la pluralité de magasins ayant un type spécifique d'éléments forment une variable latente ; et
dans lequel les variables latentes avec le magasin spécialisé de détail sont identifiées et la pluralité de magasins inconnus dans la variable latente identifiée sont les magasins concurrents et le niveau de concurrence est identifié à partir de l'amplitude de charge factorielle de chaque magasin inconnu dans la variable latente identifiée.

5. Procédé mis en œuvre par processeur (300) selon la revendication 1, dans lequel la maximisation de la contribution de variance cumulée permet :
l'enrichissement du contenu du conteneur en deux phases telles que (i) dans la phase initiale, l'enrichissement se produit dans le cadre défini comme des invites dans l'ingénierie des prompts et pour se déplacer vers un regroupement naturel qui existe parmi les magasins spécialisés et (ii) dans la phase ultérieure, l'enrichissement se produit automatiquement vers une hyper-spécialisation qui existe naturellement parmi les magasins ;
la maximisation de la profondeur de différenciation parmi les magasins par rapport à la spécialisation ; et
l'enrichissement du contenu par la direction de groupes existants parmi les magasins sous la forme de spécialisation.

6. Système (100) comprenant :
une mémoire (110) stockant des instructions ;
une ou plusieurs interfaces d'entrée/sortie (E/S) (104) ; et
un ou plusieurs processeurs matériels (108) couplés à la mémoire (110) par l'intermédiaire des une ou plusieurs interfaces E/S (104), dans lequel les un ou plusieurs processeurs matériels (108) sont configurés par les instructions pour :
recevoir l'emplacement d'un magasin spécialisé de détail d'un détaillant ;
déterminer une pluralité de magasins inconnus dans une zone de chalandise prédéfinie du magasin spécialisé de détail à l'aide d'une plateforme de cartographie en ligne, dans lequel la zone de chalandise prédéfinie dépend d'une catégorie du magasin spécialisé de détail ;
identifier un site web de commerce électronique de chacun de la pluralité de magasins inconnus et du magasin spécialisé de détail à l'aide d'une technique d'exploration Web ;
obtenir un ou plusieurs détails d'un site web de commerce électronique de chacun de la pluralité de magasins inconnus et du magasin spécialisé de détail, dans lequel les un ou plusieurs détails comportent une information associée à un ou plusieurs éléments, un prix, une image et une vidéo de chacun des un ou plusieurs éléments et une déclaration visionnaire expliquant la valeur centrale de la pluralité de magasins inconnus et du magasin spécialisé de détail ;
stocker les un ou plusieurs détails obtenus du site web de commerce électronique de chacun de la pluralité de magasins inconnus et du magasin spécialisé de détail dans des conteneurs spécifiques distincts, séparément et dans un format non structuré ;
améliorer le contenu de chaque conteneur en appliquant de manière itérative au moins une technique de plongement contextuel, dans lequel l'au moins une technique contextuelle comporte le modèle BERT (Bidirectional Encoder Representations from Transformers) et la reconnaissance d'entités nommées (NER) ;
calculer une similarité cosinus dynamique pour deux conteneurs quelconques au contenu dont l'enrichissement dynamique a été appliqué par l'intermédiaire d'au moins une technique telle qu'un plongement contextuel et similaire et une répétition sur tous les conteneurs par paires pour dériver une matrice de similarité cosinus dynamique ;
identifier une ou plusieurs variables latentes, une contribution de variance cumulée et une ou plusieurs charges factorielles en appliquant une analyse en composantes principales (PCA) sur la matrice de similarité cosinus dynamique calculée ;
maximiser la contribution de variance cumulée identifiée pour sélectionner un contenu enrichi idéal à partir de chaque conteneur de la pluralité de magasins inconnus et du magasin spécialisé de détail et le stocker dans un fichier associé de génération augmentée par récupération (RAG) enrichi ; et
réaliser une pluralité de tâches associées au détail spécialisé à l'aide du contenu enrichi idéal sélectionné d'un magasin parmi les magasins inconnus et le magasin spécialisé de détail, dans lequel la pluralité de tâches comporte (a) l'obtention d'une réponse avec une pertinence améliorée à des requêtes GenAI liées à un magasin parmi la pluralité de magasins inconnus et le magasin spécialisé de détail, et (b) la localisation d'un écart dans un assortiment en ligne pour le magasin spécialisé de détail.

7. Système (100) selon la revendication 6, dans lequel les un ou plusieurs processeurs matériels (108) sont configurés par les instructions pour :
analyser les une ou plusieurs variables latentes identifiées, et une ou plusieurs des charges factorielles pour dériver une intention de la pluralité de magasins inconnus dans la zone de chalandise prédéfinie de l'emplacement du magasin spécialisé de détail ;
identifier au moins un magasin concurrent et un niveau de concurrence en déterminant la position de la pluralité de magasins inconnus dans une variable latente sur la base du type de spécialisation, de l'amplitude des une ou plusieurs charges factorielles, dans lequel l'amplitude de charge factorielle et le type de spécialisation distinct sont considérés pour placer la pluralité de magasins inconnus dans la position supérieure de la liste de magasins concurrents ;
observer une différence entre l'au moins un magasin concurrent identifié et le magasin spécialisé de détail en appliquant les modèles GenAI multimodaux sur chaque catégorie du premier ensemble de conteneurs et du second ensemble de conteneurs correspondants avec un contenu enrichi ; et
générer une ou plusieurs recommandations sur la base de la différence observée entre l'au moins un magasin concurrent identifié et le magasin spécialisé de détail à l'aide du contenu enrichi, dans lequel les une ou plusieurs recommandations générées sont affichées à un utilisateur final pour exécuter une ou plusieurs actions correctives.

8. Système (100) selon la revendication 6, dans lequel la pluralité de tâches comprend :
l'obtention d'une réponse avec une pertinence améliorée à des requêtes GenAI liées à un magasin parmi les magasins inconnus et le magasin spécialisé de détail en appliquant GenAI dans lequel la pertinence améliorée est mesurée par rapport à la réponse reçue à partir d'un texte sans enrichissement ; et
la localisation d'un écart dans un assortiment en ligne pour le magasin de détail à l'aide des fichiers RAG avec un contenu enrichi et pour identifier la position du magasin spécialisé de détail par rapport à la spécialisation dans la zone de chalandise.

9. Système (100) selon la revendication 6,
dans lequel les une ou plusieurs variables latentes représentent le type de spécialisation de la pluralité de magasins comportant des magasins inconnus et le magasin du détaillant dans lequel la pluralité de magasins ayant un type spécifique d'éléments forment une variable latente.
dans lequel les variables latentes avec le magasin spécialisé de détail sont identifiées et la pluralité de magasins inconnus dans la variable latente identifiée sont les magasins concurrents et le niveau de concurrence est identifié à partir de l'amplitude de charge factorielle de chaque magasin inconnu dans la variable latente identifiée.

10. Système (100) selon la revendication 6, dans lequel la maximisation de la contribution de variance cumulée permet :
l'enrichissement du contenu du conteneur en deux phases telles que (i) dans la phase initiale, l'enrichissement se produit dans le cadre défini comme des invites dans l'ingénierie des prompts et pour se déplacer vers un regroupement naturel qui existe parmi les magasins spécialisés et (ii) dans la phase ultérieure, l'enrichissement se produit automatiquement vers une hyper-spécialisation qui existe naturellement parmi les magasins ;
la maximisation de la profondeur de différenciation parmi les magasins par rapport à la spécialisation ; et
l'enrichissement du contenu par la direction de groupes existants parmi les magasins sous la forme de spécialisation.

11. Un ou plusieurs supports de stockage d'informations lisibles par machine non transitoires comprenant une ou plusieurs instructions qui, lorsqu'elles sont exécutées par un ou plusieurs processeurs matériels, provoquent :
la réception, par l'intermédiaire d'une interface d'entrée/sortie (E/S), de l'emplacement d'un magasin spécialisé de détail d'un détaillant ;
la détermination d'une pluralité de magasins inconnus dans une zone de chalandise prédéfinie du magasin spécialisé de détail à l'aide d'une plateforme de cartographie en ligne, dans lequel la zone de chalandise prédéfinie dépend d'une catégorie du magasin spécialisé de détail ;
l'identification d'un site web de commerce électronique de chacun de la pluralité de magasins inconnus et du magasin spécialisé de détail à l'aide d'une technique d'exploration Web ;
l'obtention d'un ou plusieurs détails d'un site web de commerce électronique de chacun de la pluralité de magasins inconnus et du magasin spécialisé de détail, dans lequel les un ou plusieurs détails comportent une information associée à un ou plusieurs éléments, un prix, une image et une vidéo de chacun des un ou plusieurs éléments et une déclaration visionnaire expliquant la valeur centrale de la pluralité de magasins inconnus et du magasin spécialisé de détail ;
le stockage des un ou plusieurs détails obtenus du site web de commerce électronique de chacun de la pluralité de magasins inconnus et du magasin spécialisé de détail dans des conteneurs spécifiques distincts, séparément et dans un format non structuré ;
l'amélioration du contenu de chaque conteneur en appliquant de manière itérative au moins une technique de plongement contextuel, dans lequel l'au moins une technique contextuelle comporte le modèle BERT (Bidirectional Encoder Representations from Transformers) et la reconnaissance d'entités nommées (NER) ;
le calcul d'une similarité cosinus dynamique pour deux conteneurs quelconques au contenu dont l'enrichissement dynamique a été appliqué par l'intermédiaire d'au moins une technique telle qu'un plongement contextuel et similaire et une répétition sur tous les conteneurs par paires pour dériver une matrice de similarité cosinus dynamique ;
l'identification d'une ou plusieurs variables latentes, d'une contribution de variance cumulée et d'une ou plusieurs charges factorielles en appliquant une analyse en composantes principales (PCA) sur la matrice de similarité cosinus dynamique calculée ;
la maximisation de la contribution de variance cumulée identifiée pour sélectionner un contenu enrichi idéal à partir de chaque conteneur de la pluralité de magasins inconnus et du magasin spécialisé de détail et le stocker dans un fichier associé de génération augmentée par récupération (RAG) enrichi ; et
la réalisation d'une pluralité de tâches associées au détail spécialisé à l'aide du contenu enrichi idéal sélectionné d'un magasin parmi les magasins inconnus et le magasin spécialisé de détail, dans lequel la pluralité de tâches comporte (a) l'obtention d'une réponse avec une pertinence améliorée à des requêtes GenAI liées à un magasin parmi la pluralité de magasins inconnus et le magasin spécialisé de détail, et (b) la localisation d'un écart dans un assortiment en ligne pour le magasin spécialisé de détail.

12. Un ou plusieurs supports de stockage d'informations lisibles par machine non transitoires selon la revendication 11, dans lequel les une ou plusieurs instructions qui, lorsqu'elles sont exécutées par les un ou plusieurs processeurs matériels, provoquent en outre :
l'analyse des une ou plusieurs variables latentes identifiées, et d'une ou plusieurs des charges factorielles pour dériver une intention de la pluralité de magasins inconnus dans la zone de chalandise prédéfinie de l'emplacement du magasin spécialisé de détail ;
l'identification d'au moins un magasin concurrent et d'un niveau de concurrence en déterminant la position de la pluralité de magasins inconnus dans une variable latente sur la base du type de spécialisation, de l'amplitude des une ou plusieurs charges factorielles, dans lequel l'amplitude de charge factorielle et le type de spécialisation distinct sont considérés pour placer la pluralité de magasins inconnus dans la position supérieure de la liste de magasins concurrents ;
l'observation d'une différence entre l'au moins un magasin concurrent identifié et le magasin spécialisé de détail en appliquant les modèles GenAI multimodaux sur chaque catégorie du premier ensemble de conteneurs et du second ensemble de conteneurs correspondants avec un contenu enrichi ; et
la génération d'une ou plusieurs recommandations sur la base de la différence observée entre l'au moins un magasin concurrent identifié et le magasin spécialisé de détail à l'aide du contenu enrichi, dans lequel les une ou plusieurs recommandations générées sont affichées à un utilisateur final pour exécuter une ou plusieurs actions correctives.

13. Un ou plusieurs supports de stockage d'informations lisibles par machine non transitoires selon la revendication 11, dans lequel les une ou plusieurs instructions qui, lorsqu'elles sont exécutées par les un ou plusieurs processeurs matériels, provoquent en outre :
l'obtention d'une réponse avec une pertinence améliorée à des requêtes GenAI liées à un magasin parmi la pluralité de magasins inconnus et le magasin spécialisé de détail en appliquant GenAI dans lequel la pertinence améliorée est mesurée par rapport à la réponse reçue à partir d'un texte sans enrichissement ; et
la localisation d'un écart dans un assortiment en ligne pour le magasin spécialisé de détail à l'aide des fichiers RAG enrichis avec un contenu enrichi et pour identifier la position du magasin spécialisé de détail par rapport à la spécialisation dans la zone de chalandise.

14. Un ou plusieurs supports de stockage d'informations lisibles par machine non transitoires selon la revendication 11,
dans lequel les une ou plusieurs variables latentes représentent le type de spécialisation de la pluralité de magasins comportant des magasins inconnus et le magasin du détaillant dans lequel la pluralité de magasins ayant un type spécifique d'éléments forment une variable latente.
dans lequel les variables latentes avec le magasin spécialisé de détail sont identifiées et la pluralité de magasins inconnus dans la variable latente identifiée sont les magasins concurrents et le niveau de concurrence est identifié à partir de l'amplitude de charge factorielle de chaque magasin inconnu dans la variable latente identifiée.

15. Un ou plusieurs supports de stockage d'informations lisibles par machine non transitoires selon la revendication 11, dans lequel la maximisation de la contribution de variance cumulée permet :
l'enrichissement du contenu du conteneur en deux phases telles que (i) dans la phase initiale, l'enrichissement se produit dans le cadre défini comme des invites dans l'ingénierie des prompts et pour se déplacer vers un regroupement naturel qui existe parmi les magasins spécialisés et (ii) dans la phase ultérieure, l'enrichissement se produit automatiquement vers une hyper-spécialisation qui existe naturellement parmi les magasins ;
la maximisation de la profondeur de différenciation parmi les magasins par rapport à la spécialisation ; et
l'enrichissement du contenu par la direction de groupes existants parmi les magasins sous la forme de spécialisation.
